# EUROPEAN PATENT SPECIFICATION

(11) **EP 1 724 627 B1**
(45) Date of publication and mention of the grant of the patent: **02.06.2010**
(21) Application number: 06252191.9
(22) Date of filing: 24.04.2006
(51) Int. Cl.: G02F 1/1335

(54) **Color filter and fabrication method thereof**
Farbfilter und Herstellungsverfahren dafür
Filtre de couleur et son procédé de fabrication

(30) Priority: 18.05.2005 KR 20050041770
(43) Date of publication of application: 22.11.2006
(73) Proprietor: Samsung Electronics Co., Ltd., Suwon-si, Gyeonggi-do (KR)
(72) Inventor: Kim, Ji-hoon, Gangnam-gu, Seoul (KR); Kye-si, Kwon, Seoul (KR); Jung-Yong, Lee, Bundang-gu, Seongnam-si, Gyeonggi-do (KR)
(74) Representative: Greene, Simon Kenneth

(56) References cited:
- EP-A- 0 862 156
- WO-A-2004/028707
- WO-A-2004/030417
- IE-A1- 20 020 020
- US-A- 5 066 512
- PATENT ABSTRACTS OF JAPAN vol. 1995, no. 10, 30 November 1995 (1995-11-30) & JP 07 191211 A (TOPPAN PRINTING CO LTD), 28 July 1995 (1995-07-28)
- PATENT ABSTRACTS OF JAPAN vol. 2003, no. 04, 2 April 2003 (2003-04-02) -& JP 2002 365424 A (MATSUSHITA ELECTRIC IND CO LTD), 18 December 2002 (2002-12-18)

## Description

The present invention relates to a color filter for a display, and more particularly, to a color filter used in a wide-screen display such as a liquid crystal display (LCD) and a method of fabricating the same.

With the advance of PCs (specifically, portable PCs), LCDs (specifically, color LCDs) are increasingly demanded. However, the wide use of LCDs requires the reduction of the high LCD manufacturing cost. Since color filters are particularly expensive to fabricate, the color filer fabrication cost must be greatly reduced for the reduction of the LCD manufacturing cost.

A color filter fabrication method is most important for implementing the high image quality of LCDs. Many color filter fabrication methods have been proposed to implement the high image quality of LCDs. Examples of the conventional color filter fabrication methods are a pigment dispersion method, a dyeing method, an electrodeposition method, and a printing method.

In the pigment dispersion method, a pigment dispersion photosensitive resin layer is formed on a substrate and then patterned into a monochromic pattern. This process is repeated three times, thereby obtaining R/G/B color filter layers.

In the dyeing method, a glass substrate is coated thereon with a water-soluble high-molecular dyeing material, the dyeing material is patterned into a predetermined pattern by photolithography, and a colored pattern is obtained by immersing the predetermined pattern into a dyeing solution. This process is repeated three times, thereby obtaining R/G/B color filter layers.

In the electrodeposition method, a transparent electrode is patterned on a substrate, and the resulting structure is immersed into an electrodeposition coating solution to electrodeposit a first color. This process is repeated three times, thereby forming R/G/B color filter layers. Finally, the formed R/G/B color filter layers are baked.

In the printing method, a pigment is dispersed into a thermosetting resin to perform a printing process three times, thereby forming R/G/B color filter layers. The thermosetting resin is thermoset to form a colored layer.

In all the above methods, a protection layer is formed on a colored layer.

The common feature of the above methods is that R/G/B colored layers are obtained by repeating an identical process three times. This, however, increases the color filter fabrication cost and reduces the processing yield. In addition, the conventional electrodeposition method is limited in terms of a pattern shape and thus is difficult to apply to a TFT LCD. Moreover, since the conventional printing method is low in resolution and smoothness, a fine-pitch pattern is difficult to from by the printing method.

Color filter fabrication methods for solving the above problems by using an inkjet printing process are disclosed in Japanese Patent Laid-open Publication Nos. SHO 59-75205, SHO 63-235901 and HEI 1-217320. In these color fabrication methods, R/G/B colorant-containing ink is sprayed onto a transparent substrate by the inkjet printing process, and the sprayed ink is dried to form a colored image region. In the color filter fabrication methods using the inkjet printing process, R/G/B pixels can be simultaneously formed, the fabrication process can be greatly simplified, and the fabrication cost can be greatly reduced.

In the inkjet method for fabricating a color filter, while an upper surface of a color filter substrate is scanned by an inkjet head with a plurality of ink ejection nozzles, an ink of a given color is ejected from the ink ejection nozzles into each pixel region, thereby coloring the pixel region. However, the amounts of ink ejected from the ink ejection nozzles differ slightly. Therefore, when a row of pixels are colored using one ink ejection nozzle, neighboring rows of pixels can be colored by a different amount of ink. In this case, color nonuniformity occurs between the pixel rows. To reduce the color nonuniformity, there has been proposed a method of coloring pixels by performing a scanning operation several times while using different nozzles in the respective scanning operations. However, since inks ejected in the respective scanning operations may overlap one another at several portions of each pixel row, the color nonuniformity cannot be sufficiently reduced unless an ink is properly distributed in each scanning operation.

To solve the above problem and easily form a color filter, US Patent No. 5,066,512 proposed a method of fabricating a color filter by condensing an ink fired using an electrode. However, in this method, when one pixel of a closely-arranged black matrix is electrified by a first electric charge and the other neighboring pixels are electrified by a second electric charge, an insulation problem may occur. In addition, when a finely-spared ink lands in an undesired region, the resulting defect is impossible to correct.

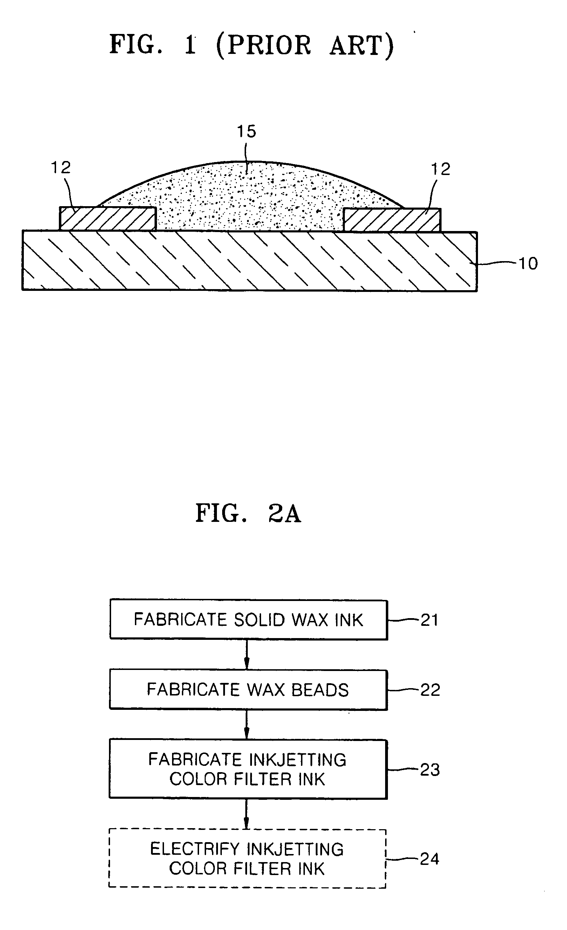

Meanwhile, an ink used in an inkjet system for fabricating a color filter is made of a mixture of carriers with pigments, dispersants, binders and monomers. However, when an ink 15 like the above ink is ejected into a pixel by an inkjetting process, the ink 15 may overflow a black matrix 12 on a substrate 10, as illustrated in FIG. 1. In more serious cases, the ink 15 may flow into the neighboring pixel, which causes a bleeding phenomenon.

JP 07 191211 A discloses a reflective liquid crystal display device. With particular reference to Figure 5, a matrix pattern and color filters are formed under an upper glass substrate. A protective coat is formed under the matrix pattern and color filters. Transparent electrodes are formed under the protective coat.

According to an aspect of the present invention, there is provided a method of fabricating a color filter, the method including: fabricating a color filter ink including wax beads, the color filter ink being ejectable by an inkjet printing process; forming a black matrix defining R/G/B pixels on one surface of a substrate and forming transparent electrodes on an opposite surface of the substrate at positions corresponding to the R/G/B pixels; injecting the fabricated color filter ink into an inkjet head and ejecting the injected color filter ink from the inkjet head into each of the R/G/B pixels; and applying a predetermined voltage between the inkjet head and the transparent electrodes such that the ejected color filter ink is precisely injected into each of the R/G/B pixels.

The method may further comprise removing the transparent electrodes from the substrate.

According to another aspect of the present invention, there is provided a color filter comprising: a substrate; and black matrixes formed on a first surface of the substrate and defining R/G/B pixels, an inside of each of the R/G/B pixels being filled with a color filter ink, wherein the color filter is characterized in that transparent electrodes are formed on a second surface of the substrate, opposite to the first surface, at positions corresponding to the R/G/B pixels.

The present invention thus provides a color filter and a fabrication method thereof using an inkjetting color filter ink into which wax beads are added.

The above and other features and advantages of the present invention will become more apparent by describing in detail exemplary embodiments thereof with reference to the attached drawings in which:
FIG. 1 is a view illustrating a phenomenon that occurs during a conventional color filter fabrication method using an inkjet process because a color filter ink ejected into a pixel overflows a black matrix and, in serious cases, flows into the neighboring pixel;
FIG. 2A is a flow diagram illustrating a process of fabricating an inkjetting color filter ink;
FIG. 2B is a sectional view illustrating a process of forming a black matrix and a transparent electrode on a transparent substrate;
FIG. 2C is a sectional view illustrating a process of injecting the inkjetting color filter ink into an inkjet head and ejecting the injected inkjetting color filter ink from the inkjet head into each pixel;
FIG. 2D is a section view illustrating a process of applying a predetermined voltage between the inkjet head and the transparent electrode so that the inkjetting color filter ink ejected from the inkjet head is precisely injected into each pixel;
FIG. 2E is a sectional view illustrating a process of heating and removing carriers (e.g., water or organic solvent) from the inkjetting color filter ink in each pixel;
FIG. 2F is a sectional view illustrating a process of planarizing a solidified color filter ink of each pixel such that the solidified color filter has the same height as the black matrix;
FIG. 2G is a sectional view illustrating a process of removing the transparent electrode from the transparent substrate to complete the color filter; and
FIG. 3 is a schematic sectional view of an electroluminescence (EL) display using the color filter according to an embodiment of the present invention.

The present invention will now be described more fully with reference to the accompanying drawings, in which exemplary embodiments of the invention are shown. In the drawings, the thicknesses of layers and regions are exaggerated for clarity.

FIGS. 2A through 2G illustrate a method of fabricating a color filter according to an embodiment of the present invention.

A color filter ink used for inkjetting (hereinafter referred to as an inkjetting color filter ink) must be fabricated before the fabrication of the color filter according to the embodiment of the present invention.

FIG. 2A is a flow diagram illustrating a process of fabricating an inkjetting color filter ink.

Referring to FIG. 2A, in operation 21, pigments, dispersants, wax, and monomers are mixed in a predetermined ratio to fabricate a solid wax ink. The dispersants serves to disperse the pigments into the wax. The dispersants may be ionic dispersants or polymeric dispersants.

In operation 22, the solid wax ink is heated by liquid electro polarization and heated solid wax ink is sprayed by a sprayer, thereby forming wax beads with a particle size of about 1 µm.

These wax beads are solid particles that cannot be directly used as an ink used for inkjetting (hereinafter referred to as an inkjetting ink). In operation 23, the wax beads are uniformly mixed with carriers (e.g., water or organic solvent), thereby forming an inkjetting color filter ink.

The above color filter fabrication method may further include an operation 24 of electrifying the inkjetting color filter ink such that the inkjetting color filter ink has a given polarity. In this case, each pixel can be precisely filled with the inkjetting color filter ink when a predetermined voltage is applied between an inkjet head and a transparent electrode formed on a transparent substrate.

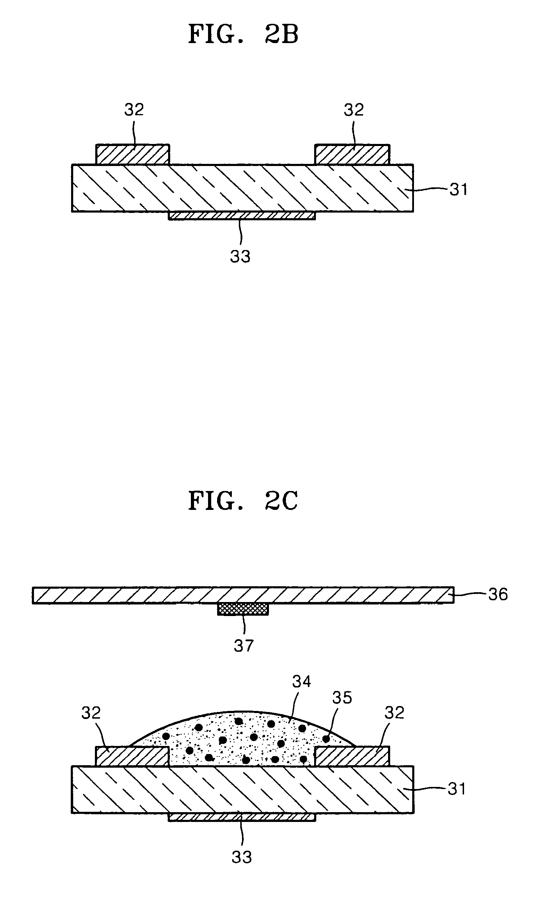

FIG. 2B is a sectional view illustrating a process of forming a black matrix and a transparent electrode on a transparent substrate.

Referring to FIG. 2B, a black matrix 32 defining R/G/B pixels is formed on an upper surface of a transparent substrate 31 by a patterning process. Thereafter, a transparent electrode 33 is formed on a lower surface of the transparent substrate 31. The transparent electrode 33 serves to precisely fill the inside of each pixel with an electrified inkjetting color filter ink. The transparent electrode 33 may be formed of an indium tin oxide (ITO). Since each pixel must be filled with the electrified inkjetting color filter ink, the transparent electrode 33 may be disposed at a center between neighboring black matrixes 32 and formed to the width and length of a portion of the transparent substrate 31 corresponding to a region between the neighboring black matrixes 32.

FIG. 2C is a sectional view illustrating a process of injecting the inkjetting color filter ink into an inkjet head and ejecting the injected inkjetting color filter ink from the inkjet head into each pixel.

Referring to FIG. 2C, an inkjetting color filter ink 34 and 35, which was fabricated by the method illustrated in FIG. 2A, is injected into an inkjet head 36. The injected inkjetting color filler ink 34 and 35 is ejected through a nozzle 37 of the inkjet head 36 into each pixel defined by the black matrix 32. The reference numerals 34 and 35 denote a carrier (e.g., water or organic solvent) and a wax bead, respectively, which are added into the inkjetting color filter ink.

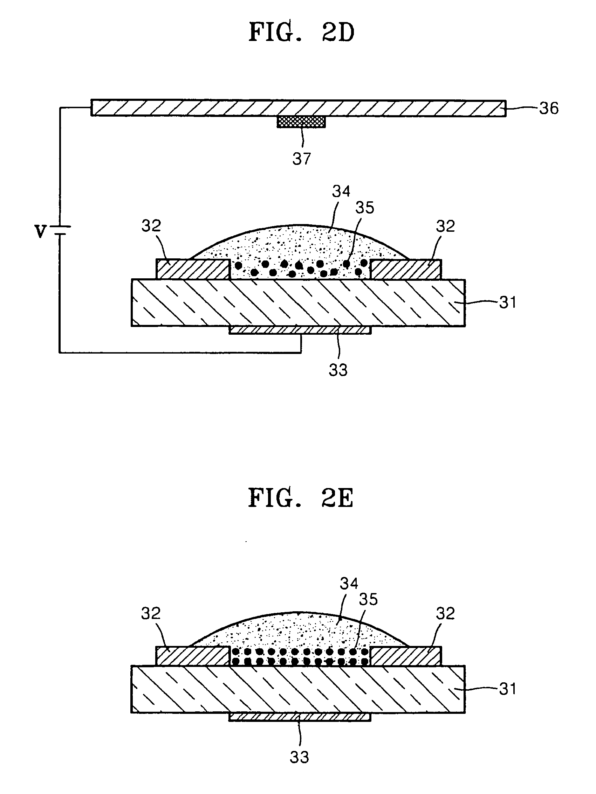

FIG. 2D is a section view illustrating a process of applying a predetermined voltage between the inkjet head 36 and the transparent electrode 33 so that the inkjetting color filter ink 34 and 35 ejected from the inkjet head 36 is precisely injected into each pixel.

Referring to FIG. 2D, after completion of the ejection of the inkjetting color filter ink 34 and 35 from the inkjet head 36, a predetermined voltage V is applied between the inkjet head 36 and the transparent electrode 33 to guide the wax beads 35 into the pixel. After the completion of the ejection of the inkjetting color filter ink 34 and 35 from the inkjet head 36, the wax beads 35 and the carriers 34 are not uniformly disposed but mixed with each other in the pixel defined by the black matrix 32. However, since what is needed for color filter fabrication is not the carriers 34 (e.g., water or organic solvent) but the wax beads 35 mixed with pigment, the carriers 34 need to be removed during the subsequent process. To this end, the predetermined voltage V is applied between the inkjet head 36 and the transparent electrode 33 to guide the wax beads 35 into the pixel. Consequently, the wax beads 35 are located in the pixel, as illustrated in FIG. 2D.

Meanwhile, in case where the inkjetting color filter ink 34 and 35 were electrified to have an electric charge with a given polarity as illustrated in FIG. 2A, a voltage with the same polarity as the electric charge of the inkjetting color filter ink 34 and 35 may be applied to the inkjet head 36 and a voltage with the opposite polarity may be applied to the transparent electrode 33. In this case, the wax beads 35 are moved toward and located near the transparent electrode 33, while the carriers 34 (e.g., water or organic solvent) are located far from the transparent electrode 33.

FIG. 2E is a sectional view illustrating a process of heating and removing the carriers 34 from the inkjetting color filter ink 34 and 35.

Referring to FIG. 2E, a heating process such as a baking process is performed to vaporize and remove the carriers 34 (e.g., water or organic solvent) from the inkjetting color filter ink 34 and 35 in each pixel.

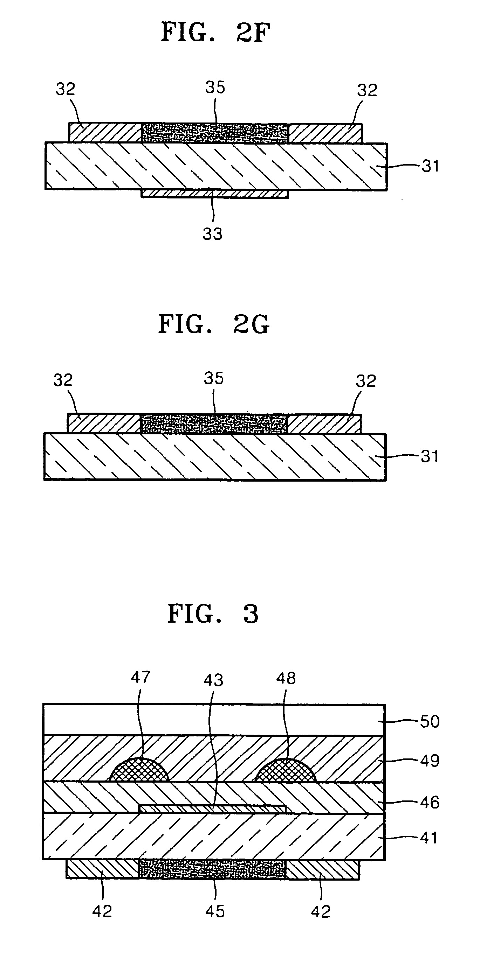

FIG. 2F is a sectional view illustrating a process of planarizing the wax beads 35 solidified after the above heating process.

Referring to FIG. 2F, the wax beads 35 are melt and then solidified by the baking process, and the solidified wax beads 35 are planarized to have the same height as the black matrix.

Thereafter, as illustrated in FIG. 2G, the transparent electrode 33 formed on the lower surface of the transparent substrate 31 is removed to complete the color filter.

Alternatively, the transparent electrode 33 formed on the lower surface of the transparent electrode 31 may not be removed from the color filter.

FIG. 3 is a schematic sectional view of an electroluminescence (EL) display using the color filter from which the transparent substrate 31 is not removed, according to an embodiment of the present invention.

Referring to FIG. 3, a space between neighboring black matrixes 42 on a lower surface of a transparent substrate 41 is filled with a color ink 45 to form R/G/B pixels on the lower surface of the transparent substrate 41, and a transparent electrode 43 is formed on an upper surface of the transparent substrate 41. Reference numerals 47 and 48 denote a source and a drain, respectively. Reference numerals 46 and 49 denote an insulation layer and a silicon layer, respectively. A reference numeral 50 denotes a white luminescent layer. In the EL display, the transparent electrode 43 functions as a gate electrode of a driving device for enabling the white luminescent layer 50 to emit light.

In the conventional art, an ink formed of a mixture of carriers with pigments, dispersants, binders and monomers is ejected from an inkjet head into a pixel to fabricate a color filter for an LCD. In this case, the ink ejected into the pixel may overflow a black matrix and may even flow into the neighboring pixel, which may cause a bleeding phenomenon. However, as described above, the color filter fabrication method of the present invention can solve the above conventional problems. Also, in the present invention, the transparent electrode formed on the transparent substrate can be used as the gate electrode in the EL display.

While the present invention has been particularly shown and described with reference to exemplary embodiments thereof, it will be understood by those of ordinary skill in the art that various changes in form and details may be made therein without departing from the scope of the present invention as defined by the following claims.

## Claims

1. A method of fabricating a color filter, the method comprising:
fabricating a color filter ink (34, 35) including wax beads, the color filter ink (34, 35) being ejectable by an inkjet printing process (21, 22, 23);
forming a black matrix (32) defining R/G/B pixels on one surface of a substrate (31) and forming transparent electrodes (33) on an opposite surface of the substrate (31) at positions corresponding to the R/G/B pixels;
injecting the fabricated color filter ink (34, 35) into an inkjet head (36) and ejecting the injected color filter ink (34, 35) from the inkjet head (36) into each of the R/G/B pixels; and
applying a predetermined voltage between the inkjet head (36) and the transparent electrodes (33) such that the ejected color filter ink is precisely injected into each of the R/G/B pixels.

2. The method of claim 1, wherein the fabricating of the color filter ink (34, 35) comprises:
making a solid wax ink by mixing pigments, dispersants, wax, and monomers (21);
changing the solid wax ink into the wax beads (22); and
uniformly mixing water or organic solvent with the wax beads (23).

3. The method of claim 2, wherein the solid wax ink is changed into the wax beads (22) by liquid electro polarization.

4. The method of claim 2, further comprising electrifying the color filter ink (34, 35) including the wax beads (24).

5. The method of claim 4, wherein a voltage with the same polarity as the electrified color filter ink (34, 35) is applied to the inkjet head (36) while a voltage with the opposite polarity is applied to the transparent electrodes (33).

6. The method of any preceding claim, wherein as many transparent electrodes (33) as there are R/G/B pixels are formed on the substrate (31).

7. The method of any preceding claim, further comprising, after the applying of the predetermined voltage, baking and planarizing the color filter ink (34, 35) injected into each of the R/G/B pixels.

8. The method of any preceding claim, further comprising removing the transparent electrodes (33) from the substrate (31).

9. A color filter comprising:
a substrate (31); and
black matrixes formed on a first surface of the substrate (31) and defining R/G/B pixels, an inside of each of the R/G/B pixels being filled with a color filter ink (34, 35),
wherein the color filter is **characterized in that** transparent electrodes (33) are formed on a second surface of the substrate (31), opposite to the first surface, at positions corresponding to the R/G/B pixels.

10. The color filter of claim 9, wherein the transparent electrodes (33) are each formed to the width and length of a portion of the transparent substrate (31) corresponding to a region between the neighboring black matrixes.

## Patentansprüche

1. Verfahren zur Herstellung eines Farbfilters, wobei das Verfahren umfasst:
Herstellen einer Farbfiltertinte (34, 35), die Wachspartikel enthält, wobei die Farbfiltertinte (34, 35) durch einen Tintenstrahldruckprozess (21, 22, 23) ausstoßbar ist,
Bilden einer schwarzen Matrix (32), die R/G/B-Pixel auf einer Seite eines Substrats (31) definiert, und Bilden von transparenten Elektroden (33) auf einer gegenüberliegenden Seite des Substrats (31) an Positionen, die den R/G/B-Pixeln entsprechen,
Einspritzen der hergestellten Farbfiltertinte (34, 35) in einen Tintenstrahlkopf (36) und Ausstoßen der eingespritzten Farbfiltertinte (34, 35) aus dem Tintenstrahlkopf (36) in jedes der R/G/B-Pixel und
Anlegen einer vorgegebenen Spannung zwischen den Tintenstrahlkopf (36) und den transparenten Elektroden (33) derart, dass die ausgestoßene Farbfiltertinte präzise in jedes der R/G/B-Pixel eingespritzt wird.

2. Verfahren nach Anspruch 1, wobei das Herstellen der Farbfiltertinte (34, 35) umfasst:
Zubereiten einer festen wachsartigen Tinte durch Vermischen von Pigmenten, Dispergiermitteln, Wachs und Monomeren (21),
Umwandeln der festen wachsartigen Tinte in Wachspartikel (22) und
gleichförmiges Vermischen von Wasser oder organischem Lösungsmittel mit den Wachspartikeln (23).

3. Verfahren nach Anspruch 2, wobei die feste wachsartige Tinte durch Flüssigkeitselektropolarisation in die Wachspartikel (22) umgewandelt wird.

4. Verfahren nach Anspruch 2, weiter umfassend eine Elektrobehandlung der Farbfiltertinte (34, 35) mit den Wachspartikeln (24).

5. Verfahren nach Anspruch 4, wobei eine Spannung mit der gleichen Polarität wie die elektrobehandelte Farbfiltertinte (34, 35) am Tintenstrahlkopf (36) angelegt wird, während eine Spannung mit der entgegengesetzten Polarität an die transparenten Elektroden (33) angelegt wird.

6. Verfahren nach einem der vorhergehenden Ansprüche, wobei so viele transparente Elektroden (33) auf dem Substrat (31) gebildet werden, wie R/G/B-Pixel vorhanden sind.

7. Verfahren nach einem der vorhergehenden Ansprüche, weiter umfassend Backen und Planarisieren der in jedes der R/G/B-Pixel eingespritzten Farbfiltertinte (34, 35) nach dem Anlegen der vorgegebenen Spannung.

8. Verfahren nach einem der vorhergehenden Ansprüche, weiter umfassend Entfernen der transparenten Elektroden (33) vom Substrat (31).

9. Farbfilter umfassend:
ein Substrat (31) und
schwarze Matrizen, die auf einer ersten Seite des Substrats (31) gebildet sind und R/G/B-Pixel definieren, wobei eine Innenseite jedes der R/G/B-Pixel mit einer Farbfiltertinte (34, 35) gefüllt ist,
wobei der Farbfilter **dadurch gekennzeichnet ist, dass** transparente Elektroden (33) auf einer zweiten Seite des Substrats (31) gegenüberliegend zur ersten Seite an Positionen gebildet sind, die den R/G/B-Pixeln entsprechen.

10. Farbfilter nach Anspruch 9, wobei die transparenten Elektroden (33) jeweils in der Breite und Länge eines Abschnitts des transparenten Substrats (31) gebildet sind, der einem Bereich zwischen benachbarten schwarzen Matrizen entspricht.

## Revendications

1. Procédé de fabrication d'un filtre coloré, le procédé consistant à :
fabriquer une encre de filtre coloré (34, 35) comprenant des perles de cire, l'encre de filtre coloré (34, 35) pouvant être éjectée par un processus d'impression par jet d'encre (21, 22, 23) ;
former une matrice noire (32) définissant des pixels R/V/B sur une surface d'un substrat (31) et former des électrodes transparentes (33) sur une surface opposée du substrat (31) à des positions correspondant aux pixels R/V/B ;
injecter l'encre de filtre coloré (34, 35) fabriquée dans une tête de jet d'encre (36) et éjecter l'encre de filtre coloré (34, 35) injectée de la tête de jet d'encre (36) dans chacun des pixels R/V/B ; et
appliquer une tension prédéterminée entre la tête de jet d'encre (36) et les électrodes transparentes (33) de sorte que l'encre de filtre coloré éjectée soit injectée avec précision dans chacun des pixels R/V/B.

2. Procédé selon la revendication 1, dans lequel la fabrication de l'encre de filtre coloré (34, 35) consiste à :
réaliser une encre solide à base de cire en mélangeant des pigments, des dispersants, de la cire et des monomères (21) ;
changer l'encre solide à base de cire en perles de cire (22) ; et
mélanger uniformément de l'eau ou un solvant organique avec les perles de cire (23).

3. Procédé selon la revendication 2, dans lequel l'encre solide à base de cire est changée en perles de cire (22) par électropolarisation de liquide.

4. Procédé selon la revendication 2, comprenant en outre l'électrisation de l'encre de filtre coloré (34, 35) comprenant les perles de cire (24).

5. Procédé selon la revendication 4, dans lequel une tension avec la même polarité que l'encre de filtre coloré (34, 35) électrisée est appliquée à la tête de jet d'encre (36) tandis qu'une tension avec la polarité opposée est appliquée aux électrodes transparentes (33).

6. Procédé selon l'une quelconque des revendications précédentes, dans lequel autant d'électrodes transparentes (33) qu'il y a de pixels R/V/B sont formées sur le substrat (31).

7. Procédé selon l'une quelconque des revendications précédentes, consistant en outre, après l'application de la tension prédéterminée, à cuire et à aplanir l'encre de filtre coloré (34, 35) injectée dans chacun des pixels R/V/B.

8. Procédé selon l'une quelconque des revendications précédentes, comprenant en outre le retrait des électrodes transparentes (33) du substrat (31).

9. Filtre coloré comprenant:
un substrat (31) ; et
des matrices noires formées sur une première surface du substrat (31) et définissant des pixels R/V/B, l'intérieur de chacun des pixels R/V/B étant rempli d'une encre de filtre coloré (34, 35),
dans lequel le filtre coloré est **caractérisé en ce que** des électrodes transparentes (33) sont formées sur une deuxième surface du substrat (31), opposée à la première surface, à des positions correspondant aux pixels R/V/B.

10. Filtre coloré selon la revendication 9, dans lequel les électrodes transparentes (33) sont formées chacune à la largeur et à la longueur d'une partie du substrat transparent (31) correspondant à une région entre les matrices noires voisines.
